# EUROPEAN PATENT APPLICATION

(11) **EP 1 707 997 A1**
(43) Date of publication of application: **04.10.2006**
(21) Application number: 06006383.1
(22) Date of filing: 28.03.2006
(51) Int. Cl.: G02B 5/30

(54) **Optical low-pass filter**

(30) Priority: 28.03.2005 JP 2005090795; 26.01.2006 JP 2006017364
(71) Applicant: SEIKO EPSON CORPORATION, Shinjuku-ku, Tokyo 163-0811 (JP)
(72) Inventor: Uehara, Takehiko, Suwa-shi, Nagano 392-8502 (JP); Hara, Kazuhiro, Suwa-shi, Nagano 392-8502 (JP); Kojima, Tadao, Suwa-shi, Nagano 392-8502 (JP)
(74) Representative: HOFFMANN EITLE

(57) **Abstract**

An optical low-pass filter includes: two birefringent plates; a phase plate made of a polymer film and bonded between the two birefringent plates through an adhesive layer or a tacky layer; and a sealing portion provided over an entire region of an external periphery surface of the optical low-pass filter, with the entire region including at least the external peripheral borders of the two tacky layers and of the retardation film.

## Description

### BACKGROUND

### 1. Technical Field

The invention relates to an optical low-pass filter that suppresses a high frequency component of a spatial frequency.

### 2. Related Art

An imaging device such as a digital still camera or a digital video camera is configured including an imaging element such as a CCD or a CMOS. A limited number of pixels arranged with a predetermined pitch convert an optical image into an electrical signal to take a picture. In such an imaging device, when a spatial frequency of an optical image is equal to or less than one half a sampling frequency determined by an arrangement pitch of pixels, a pseudo-signal such as moire is not generated. However, when a spatial frequency of an optical image exceeds one half a sampling frequency, a pseudo-signal is generated to deteriorate image quality.

In order to suppress the pseudo-signal such as the moire from being generated, in an existing imaging device, in front of an imaging element, an optical filter (so-called optical low-pass filter) is disposed to suppress a high frequency component of a spatial frequency of the optical image.

As a structure of the optical low-pass filter, in general a type having three birefringent plates and a type in which a phase plate is interposed between two birefringent plates are known, and a vertically added type where a quarter-wave plate as a phase plate is interposed between two birefringent plates is known as a high performance one.

In recent years, as a quarter-wave plate, a polymer film formed according to a uniaxial drawing method has been proposed to use (JP-A-7-152035). When a polymer film is used, thinning and reduction of the manufacturing cost can be achieved. As a birefringent plate, a quartz plate is generally used.

However, it was found that in an optical low-pass filter in which two quartz plates as birefringent plate are adhered through an adhesive layer or a tacky with a polymer film interposed therebetween, in the durability test where the filter is exposed to high temperature and high humidity for a long time, a phenomenon where the polymer film peels off the quartz plate starting at an external periphery thereof toward a center portion (hereinafter referred to as a peeling phenomenon) is caused and thereby quality problems are generated.

### SUMMARY

An advantage of some aspects of the invention is to provide a high quality optical low-pass filter that is difficult to cause a peeling phenomenon under high temperature and high humidity conditions.

An optical low-pass filter according to a first aspect of the invention includes: two birefringent plates; a phase plate made of a polymer film and bonded between the two birefringent plates through an adhesive layer or a tacky layer; and a sealing portion provided over an entire periphery of an external periphery surface of the optical low-pass filter.

The inventors found that the adhesive layer or the tacky layer that is used to adhere the birefringent plates and the phase plate made of polymer film absorbs moisture under high temperature and high humidity conditions to deteriorate the adhesive force or the tack force to result in the peeling phenomenon. The inventors further found that it is effective to inhibit the moisture from intruding from an external peripheral border of the adhesive layer or the tacky layer inside thereof and for this to dispose a sealing portion on an external periphery surface of the optical low-pass filter including an entire external peripheral border of the adhesive layer or the tacky layer to shield the interior thereof from the exterior.

It is preferable that in the optical low-pass filter according to the first aspect the sealing portion is configured of a layer formed according to a physical deposition method or a layer formed according to a chemical deposition method.

The layer formed according to a physical deposition method such as a vapor deposition method or a chemical deposition method such as a CVD method, when materials and the deposition method are made appropriate, can be formed as a sealing portion that can shield the moisture from permeating from the exterior into the interior.

It is preferable that in the optical low-pass filter according to the first aspect the sealing portion is formed of a tacky tape.

When a tacky tape that uses a resin film or a metal film that is difficult to permeate the moisture is wound around an external periphery surface to form a sealing portion covering an external peripheral border of the adhesive layer or the tacky layer, the moisture can be shielded from the outside and thereby the peeling phenomenon can be effectively inhibited from occurring.

It is preferable that in the optical low-pass filter according to the first aspect the sealing portion is configured of a resin composition.

When an entire external peripheral border of the adhesive layer or the tacky layer is covered with, for instance, an adhesive agent or a resin composition that can form a coated film to form a sealing portion that shields the moisture from externally intruding, the peeling phenomenon can be effectively inhibited.

It is preferable that in the optical low-pass filter according to the first aspect an infrared absorption filter plate is adhered through an adhesive layer or a tacky layer to an incidence side of light of a birefringent plate that is positioned on an incidence side of light of the two birefringent plates, and the sealing portion covers an entire external periphery surface of the infrared absorption filter plate and the adhesive layer or the tacky layer.

The infrared absorption filter plate is recognized from experiences to readily absorb moisture and is considered as one of causes of the peeling phenomenon. Furthermore, it was found that the adhesive layer or the tacky layer that is used to adhere the birefringent plate and the infrared absorption filter plate absorbs the moisture under high temperature and high humidity conditions to lower the adhesive force or the tack strength, and thereby the peeling phenomenon is caused. Accordingly, when the external periphery surface of the optical low-pass filter including the entire external peripheral border of the infrared absorption filter plate and the adhesive layer or the tacky layer is shielded from the outside with the sealing portion, the peeling phenomenon can be effectively inhibited from occurring.

It is preferable that in the optical low-pass filter according to the first aspect an external peripheral border of the phase plate is at least partially located inside of an external peripheral border of at least one birefringent plate of the two birefringent plates to form a step or a recess and the sealing portion is formed in the step or the recess.

By making use of the step or the recess, a thick sealing portion can be readily formed. Accordingly, the external peripheral border of the adhesive layer or the tacky layer can be assuredly shielded.

According to a second aspect of the invention, an optical low-pass filter in which an entire periphery of an external periphery surface of the optical low-pass filter formed by adhering two birefringent plates through an adhesive layer or a tacky layer with a phase plate made of a polymer film interposed therebetween is processed with a water repelling agent is provided.

When the external peripheral border exposed outside of the adhesive layer or the tacky layer is processed with a water repelling agent, the adhesive force between the adhesive layer or the tacky layer and the birefringent plates and the phase plate made of a polymer film is improved or the moisture becomes difficult to permeate from the external peripheral border of the adhesive layer or the tacky layer into the inside thereof. Accordingly, the peeling phenomenon can be inhibited from occurring.

It is preferable that in the second aspect of the optical low-pass filter, the water repelling agent is a silane coupling agent.

The silane coupling agent can improve the adhesive force between the adhesive layer or the tacky layer and the birefringent plate and the phase plate. Accordingly, even when the adhesive layer or the tacky layer absorbs the moisture to some extent, the peeling phenomenon can be effectively inhibited from occurring.

### BRIEF DESCRIPTION OF THE DRAWINGS

The invention will be described with reference to accompanying drawings, wherein like numbers reference like elements.

Fig. 1A is a plan view of an optical low-pass filter 1 in a first embodiment and Fig. 1B is a sectional view of the optical low-pass filter 1.

Fig. 2 is a sectional view showing another example of an optical low-pass filter according to the first embodiment.

Fig. 3 is a sectional view showing a schematic structure of an optical low-pass filter according to a second embodiment.

Fig. 4A is a plan view of an optical low-pass filter 1 in an example 1 of a third embodiment and Fig. 4B is a sectional view of the optical low-pass filter 1.

Fig. 5A is a plan view of an optical low-pass filter 1 in an example 2 of the third embodiment and Fig. 5B is a sectional view of the optical low-pass filter 1.

Fig. 6A is a plan view of an optical low-pass filter 1 in an example 3 of the third embodiment and Fig. 6B is a sectional view of the optical low-pass filter 1.

Fig. 7 is a sectional view of an optical low-pass filter 1 and a solid-state imaging element 130 in an imaging device.

### DESCRIPTION OF EXEMPLARY EMBODIMENTS

In what follows, embodiments of an optical low-pass filter according to the invention will be described. However, the invention is not restricted to embodiments below.

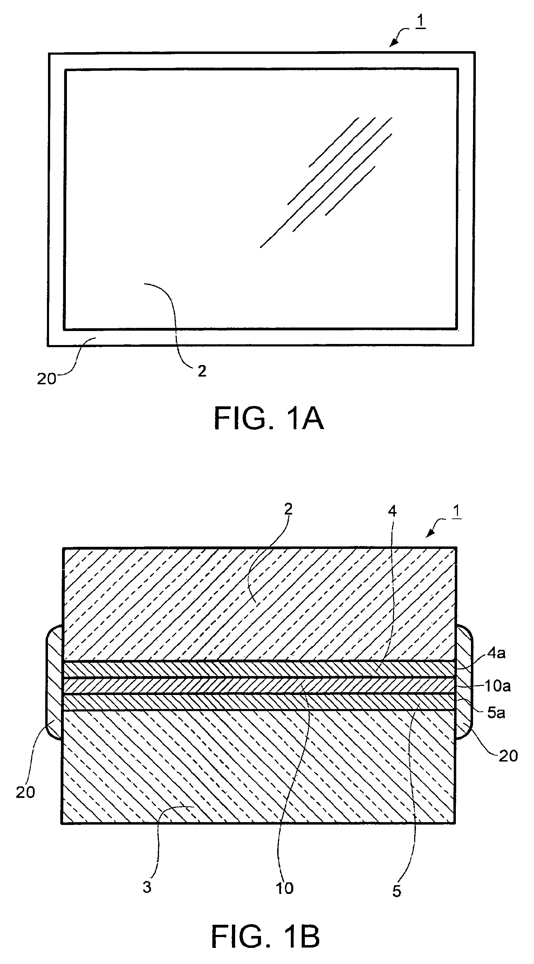

First embodiment
Fig. 1A is a plan view of an optical low-pass filter 1 in a first embodiment and Fig. 1B is a sectional view of the optical low-pass filter 1.

With tacky layers 4 and 5 and a retardation film 10 made of a polymer film as a quarter-wave plate adhered between quartz plates 2 and 3 as birefringent plate, and, with an entire region including at least an external peripheral border 4a of the tacky layer 4, an external peripheral border 5a of the tacky layer 5 and an external peripheral border 10a of the retardation film 10 covered, a sealing portion 20 is disposed.

The quartz plates 2 and 3 as birefringent plate may be made of, other than quartz, a crystal plate having the birefringence such as lithium niobate (LiNbO₃). Only quartz plate may be used for both, quartz and lithium niobate may be combined, or birefringent plate constituted of other materials may be combined. The birefringence means a phenomenon where incident light is separated into two lights of an ordinary light and an extraordinary light each of which has a vibration direction perpendicular to the other. As a crystal having the birefringence, other than quartz and lithium niobate, sodium nitrate, calcite, rutile, KPD (KH₂PO₄) and APD (NH₄H₂PO₄) can be cited.

The retardation film 10 is a transparent film that is introduced in an optical system to give a phase difference and a polymer film that allows linearly polarized light components that vibrate in primary axis directions vertical to each other to transmit to give necessary phase difference between two components. There are a half-wave plate and a quarter-wave plate. As the retardation film 10 in the optical low-pass filter 1, a half-wave plate and a quarter-wave plate are used in combination or a quarter-wave plate is used singularly.

In the optical low-pass filter 1 according to the invention, as a quarter-wave plate, a polymer film having the wavelength dispersion characteristics where as a wavelength of incident light becomes larger the phase difference becomes larger is preferably used. A polymer film that works as such a quarter-wave plate can be commercially obtained. The commercially available polymer film is made of polycarbonate that is mono-axially drawn and has the glass transition temperature of 200°C or more.

When the phase plate is made of a polymer film 10, the optical low-pass filter 1 can be made thinner, has the wavelength dispersion characteristics where as a wavelength of incident light becomes larger the phase difference becomes larger and can convert over a large wavelength range a polarized state of incident light from a linearly polarized state to a circularly polarized state. Accordingly, a high performance optical low-pass filter 1 that can work as a quarter-wave plate to incident light over a large wavelength range can be configured.

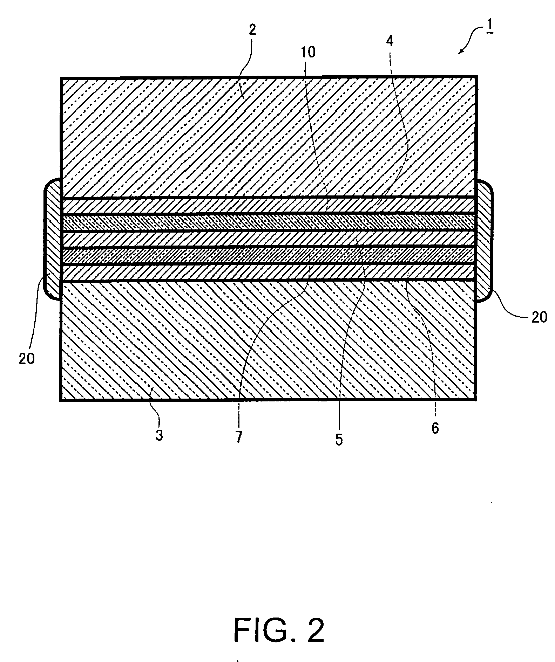

Furthermore, an optical low-pass filter 1 shown with a section in Fig. 2, though similar to the optical low-pass filter 1 shown in Figs. 1A and 1B in a fundamental configuration, has a structure where between a birefringent plate 2 or a birefringent plate 3 and a retardation film 10 through a tacky layer 5 and a tacky layer 6 an infrared absorption filter plate 7 is interposed. The infrared absorption filter plate 7 in which an infrared absorption component is blended in a glass substrate cuts an infrared component and thereby inhibits a solid-state imaging element having the sensitivity as well in the infrared from being exposed. The infrared absorption filter plate 7 preferably has an arrangement structure where the infrared absorption filter plate 7 is joined between, of two birefringent plates 2 and 3, the birefringent plate 2 or the birefringent plate 3 located toward the light incident side and the polymer film 10 through the adhesive layer or the tacky layer.

From experiences, the infrared absorption filter plate 7 is recognized to be hygroscopic and considered one of causes of the peeling phenomenon. Accordingly, as shown in Fig. 2, the sealing portion 20 preferably covers as well an entire external periphery surface of the infrared absorption filter plate 7 so as to shield the moisture from the outside.

The sealing portion 20 can be configured with a layer formed by means of the physical deposition method, a layer formed by means of the chemical deposition method, a tacky tape or a resin composition. As the physical deposition method, a vacuum deposition method, an ion assist deposition method, an ion plating method and a sputtering method can be adopted. In the vacuum vapor deposition method, a thin film material is heated and vaporized in high vacuum and vaporized particles thereof are deposited on a substrate to form a thin film. In the ion plating method, vaporized particles are ionized, accelerated under an electric field and stuck on a substrate, and there are an APS (Advanced Plasma Source) method, an EBEP (Electron Beam Excited Plasma) method and an RF (Radio Frequency)-direct application-on-substrate method (a reactive vacuum vapor deposition is carried out with high frequency gas plasma generated inside of a vapor deposition chamber). The sputtering method is a thin film deposition method where according to the sputtering where ions accelerated under an electric field are collided with a thin film material to knock out the thin film material, vaporized particles are deposited on a substrate. As the chemical deposition method, a CVD (chemical vapor phase deposition method) and an electroless plating method can be adopted.

As a material that can be deposited according to the physical deposition method or the chemical deposition method, metals such as aluminum, nickel, copper, chromium, silver and gold, carbides, nitrides, oxides and borides of metals can be cited. A film thickness, as far as it can inhibit the moisture from intruding inside of the film, is not particularly restricted and substantially in the range of 50 nm to 1 µm.

For instance, when silicon oxide as the metal oxide is deposited according to the vacuum vapor deposition method, a following method can be applied. That is, several sheets of optical low-pass filters are stacked, and, on a portion that becomes a surface, according to the vapor deposition a deposition layer is disposed so as to inhibit bruises from being caused and impurities from adhering. The bruises and adhesion of the impurities disturb the moisture absorption resistance. For instance, in a vacuum deposition unit on a side surface of the stacked optical low-pass filters a layer of SiO₂ is deposited. A film thickness of SiO₂ is preferably in the range of 50 nm to 1 µm. When the film thickness is too thick, the productivity is deteriorated and when it is too thin the moisture shielding effect cannot be obtained sufficiently. The deposition can be applied to individual side surfaces or by disposing a unit that rotates the stacked optical low-pass filters in the vapor deposition unit the respective side surfaces may be continuously or simultaneously deposited.

When the sealing portion 20 is configured with a tacky tape, with a resin film such as PEN (polyethylene naphthalate) or a metal foil that is excellent in the gas barrier properties as a tape base material, a silicone based tacky adhesive is coated on one surface that is processed so that the silicone based tacky adhesive may adhere thereto to prepare a tape of which base material and tacky adhesive are rendered water impermeable. Then, thus prepared tape is wound around the external periphery surface of the optical low-pass filter once or more times.

As a specific method of winding the tacky tape, for instance, one that is formed in tape by coating a silicone based tacky adhesive (10 µm) on one surface of a PEN film is wound on a side surface of the optical low-pass filter at least once. According to a method of winding, the optical low-pass filter is fastened to a rotary table with a vacuum chuck, a tip end of the tape is adhered to a side surface of the optical low-pass filter, the rotary table is rotated one circuit or more, and the tape is cut. Thereby, the tape that can inhibit the tacky adhesive from absorbing moisture can be wound uniformly and without leaving gap.

As the resin composition that constitutes the sealing portion 20, a sealing resin that is used as for instance an adhesive and a sealing agent can be cited. As the adhesive, an epoxy based adhesive, an acryl based adhesive, a hot-melt based adhesive and a silicone based adhesive, all of which are excellent in the moisture resistance, can be cited. As the sealing resin, an epoxy resin, a silicone resin, propylene, a methacrylic resin, polyethylene terephthalate, polybutylene terephthalate, a vinyl chloride resin, a vinylidene chloride resin, polyamide and a fluorine-based resin, all of which are water impermeable and used for sealing for instance semiconductors can be cited.

The adhesive is coated on an external periphery surface of the optical low-pass filter by use of a coating method predetermined according to the kind of the adhesive such as a brush coating method, a stamp coating method, a spray coating method, a blade coating method or a roller coating method, followed by curing. Thereby, the sealing portion 20 can be formed. As the epoxy based adhesive, two-liquid type CS2340-5 (trade name, manufactured by Cemedine Co., Ltd.) can be cited. Furthermore, as the acrylic UV-curable adhesive, OPTOKLEB UT-20 excellent in the water and humidity resistance and manufactured by Adell Co., Ltd. can be cited. The UT-20, after coating on an external periphery surface of the optical low-pass filter, is cured under UV irradiation in a nitrogen atmosphere.

When the sealing portion 20 is formed with a sealing resin, the resin is appropriately diluted in a solvent and used as a solution. The solution is coated on an external periphery surface of the optical low-pass filter with for instance a brush, followed by drying in an oven at for instance 100°C for 1 hr to vaporize the solvent, and thereby a sealing portion 20 can be formed. The coating method may be, other than the brush coating method, a stamp coating method, a spray coating method, a blade coating method or a roller coating method.

A thickness of the sealing portion 20 due to the resin composition, not particularly restricted, is preferably in the range of 0.001 to 50 µm. When it is too thin, the moisture shielding effect cannot be sufficiently obtained and when it is too thick the productivity is damaged.

According to the optical low-pass filter according to the first embodiment, on an area of the external periphery surface including at least an entire external peripheral border 4a of the tacky layer 4 of the optical low-pass filter 1, an entire external peripheral border 5a of the tacky adhesive 5 and an entire external peripheral border 10a of the retardation film 10, the sealing portion 20 is formed. Thereby, the tacky adhesives 4 and 5 or the retardation film 10 and furthermore the infrared absorption filter plate 7 are inhibited from absorbing the moisture, and thereby the peeling phenomenon between the quartz plates 2 and 3 and the retardation film 10 and the tacky layers 4 and 5 can be inhibited from occurring.

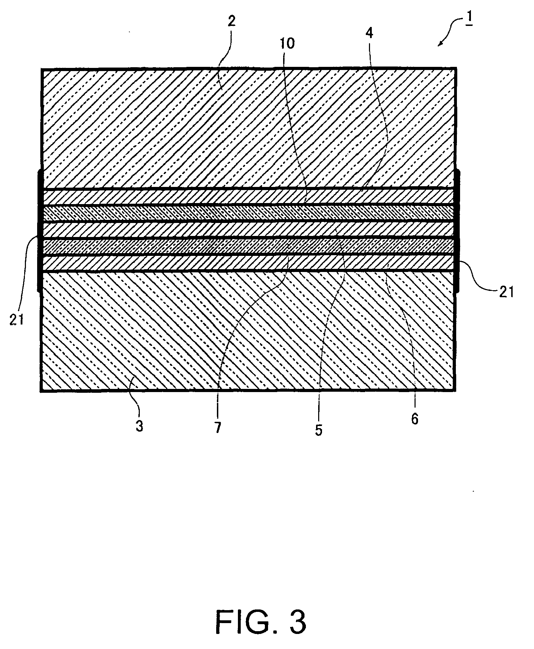

Second Embodiment
Fig. 3 is a sectional view showing a schematic configuration of an optical low-pass filter according to a second embodiment. A principal configuration of the optical low-pass filter is substantially same as that shown in Fig. 2; accordingly, like elements are given with like numbers and descriptions thereof will be omitted. The optical low-pass filter according to the second embodiment is different from that shown in Fig. 2 in that, instead of the sealing portion 20, a water-repelling portion 21 that is obtained by processing an external periphery surface of the optical low-pass filter where external peripheral borders of tacky layers 4, 5 and 6 are exposed with a water repelling agent while covering entire external peripheral borders of the tacky layers 4, 5 and 6 and the retardation film 10 and furthermore an entire external periphery surface of the infrared absorption filter plate 7 is disposed. The water-repelling portion 21 covers entire external peripheral borders of the tacky layers 4, 5 and 6 and the retardation film 10 and an external periphery surface of the infrared absorption filter plate 7; accordingly, external peripheral borders of the tacky layers 4, 5 and 6 and the retardation film 10 and the external periphery surface of the infrared absorption filter plate 7 are processed with a water repelling agent.

When the externally-exposed external peripheral borders of the tacky layers 4, 5 and 6 and the external peripheral border of the retardation film 10 and the external periphery surface of the infrared absorption filter plate 7 are processed with a water repelling agent, the adhesive force of the birefringent plates 2 and 3 and the retardation film 10 and the infrared absorption filter plate 7 to the tacky layers 4, 5 and 6 is improved or owing to the water repellency due to the water-repelling process the moisture becomes difficult to permeate inside of the tacky layers 4, 5 and 6 or the retardation film 10 or the infrared absorption filter plate 7. Accordingly, the peeling phenomenon can be effectively inhibited from occurring.

As the water repelling agent, a silane coupling agent, a fluorine-containing silane compound, a fluorine-containing resin and a fluorine based surfactant can be cited.

Here, the silane coupling agent is a carbofunctional silane that has in the same molecule an organic functional group that has a substitution group bonding with an organic material and a hydrolyzing group that reacts with an inorganic material. Specifically, these are compounds represented by R¹SiX¹ₘX²₍₃₋ₘ₎, wherein R¹ expresses an organic group, X¹ expresses -OR² or -Cl, X² expresses -R², R² expresses an alkyl group having 1 through 4 carbon atoms, and m expresses 2 or 3.

The silane coupling agent is chemically absorbed by a hydroxyl group on surfaces of the quartz plates 2 and 3, the tacky adhesives 4, 5 and 6 and the retardation film 10 to improve the adhesive force of the retardation film 10 and the quartz plates 2 and 3 to the tacky adhesive. In addition, since the silane coupling agent has the water repellency, even when the tacky adhesives 4, 5 and 6 adsorb the moisture a little, the peeling phenomenon can be inhibited from occurring. Of the silane coupling agents, in particular, in the case of the fluorine-containing silane coupling agents where the R¹ has a perfluoroalkyl structure CₙF₂ₙ₊₁ or a perfluoroalkyl ether structure C_{P}F₂ₚ₊₁O(CₚF₂ₚO)ᵣ, since a surface free energy of a solid surface becomes lower than 25 mJ/m², the affinity with a polar material becomes smaller, and the water repellency is further improved, it can be preferably used.

More specifically, examples of the silane coupling agent include CF₃-CH₂CH₂-Si (OCH₃) ₃, CF₃ (CF₂) ₃₋CH₂CH₂-Si(OCH₃)₃, CF₃(CF₂)₅-CH₂CH₂-Si(OCH₃)₃, CF₃(CF₂)₅-CH₂CH₂₋Si (OC₂H₅) ₃, CF₃(CF₂)₇-CH₂CH₂-Si (OCH₃) ₃, CF₃(CF₂)₁₁-CH₂CH₂₋Si(OC₂H₅)₃, CF₃(CF₂)₃-CH₂CH₂-Si (CH₃) (OCH₃)₂, CF₃(CF₂)₇-CH₂CH₂₋Si (CH₃) (OCH₃) ₂, CF₃(CF₂)₈-CH₂CH₂-Si (CH₃) (OC₂H₅) ₂, CF₃(CF₂)₈₋CH₂CH₂ - S i (C₂H₅) (OC₂H₅) ₂, CF₃O (CF₂O) ₆-CH₂CH₂-Si (OC₂H₅) ₃, CF₃O (C₃F₆O)₄-CH₂CH₂-Si (OCH₃)₃, CF₃O (C₃F₆O)₂(CF₂O)₃-CH₂CH₂₋Si(OCH₃)₃ , CF₃O (C₃F₆O)₈-CH₂CH₂-Si (OCH₃) ₃, CF₃O (C₄F₉O)₅-CH₂CH₂₋Si(OCH₃)₃, CF₃O (C₄F₉O)₅-CH₂CH₂-Si (CH₃) (OC₂H₅) ₂ and CF₃O (C₃F₆O)₄-CH₂CH₂-Si (C₂H₅) (OCH₃) ₂ can be cited. However, the silane coupling agent is not restricted to the structures.

As a coating method of the silane coupling agent, a brush coating method, a stamp coating method, a spray coating method, a blade coating method or a roller coating method can be cited. A film thickness being coated, not particularly restricted, is preferably in the range of 0.001 to 50 µm. When it is too thin, the water repellency cannot be sufficiently obtained and when it is too thick the productivity is damaged.

As an example, with a silane coupling agent, an optical low-pass filter was subjected to a water repelling process. As the silane coupling agent, for instance, KBM603 (trade name, manufactured by Shin-Etsu Chemical Co., Ltd.) was used and diluted with ethanol so that a concentration thereof may be 3% by weight. The solution was coated on an external periphery of an optical low-pass filter with a brush, followed by drying in an oven at 100°C for 1 hr. Thereby, a water repelling agent that can inhibit the tacky adhesive from absorbing the moisture can be uniformly and without leaving gap can be disposed. One optical low-pass filter may be coated at one time. However, when the productivity is taken into consideration, from a viewpoint of efficiency, it is preferable to band some filters followed by coating simultaneously according to the above method.

As the fluorine-containing silane compound, compounds shown with a general formula (1) below can be cited. 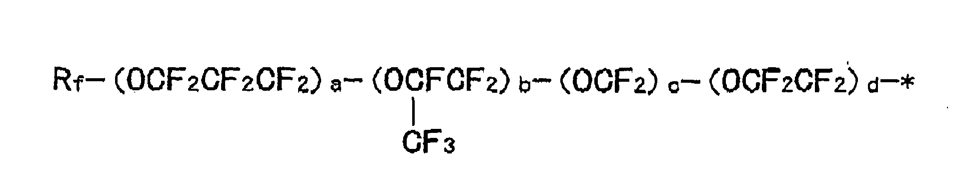 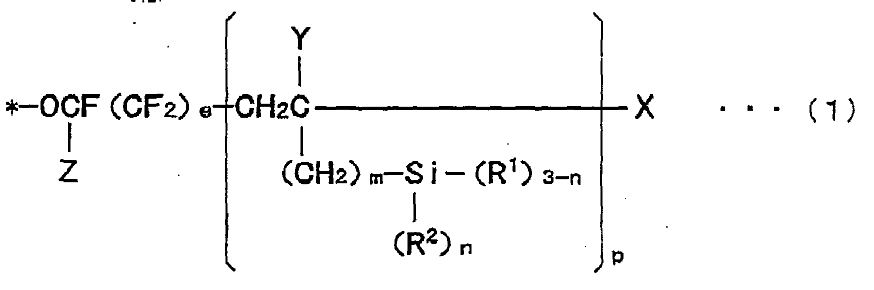 In the general formula (1), R_{f} expresses a straight chain or branched chain perfluoroalkyl group having 1 to 16 carbon atoms and preferably expresses CF₃-, C₂F₅- or C₃F₇-. X expresses iodine or hydrogen, Y expresses hydrogen or a lower alkyl group, and Z expresses fluorine or a trifluoromethyl group. R¹ expresses a hydrolysable group, preferably, for instance, halogen, -OR³, -OCOR³, - OC (R³) =C (R⁴)₂, -ON=C (R³) ₂ or -ON=CR⁵, and more preferably chlorine, -OCH₃ or -OC₂H₅. Here, R³ expresses an aliphatic hydrocarbon group or an aromatic hydrocarbon group, R⁴ expresses hydrogen or a lower aliphatic hydrocarbon group, and R⁵ expresses a divalent aliphatic hydrocarbon group with 3 to 6 carbon atoms. R² expresses hydrogen or an inactive monovalent organic group and preferably a monovalent hydrocarbon group having 1 to 4 carbon atoms. Each of a, b, c and d expresses an integer of 0 to 200 and preferably 1 to 50, and e expresses 0 or 1. Each of m and n expresses an integer of 0 to 2 and preferably 0. P expresses an integer equal to or more than 1 and preferably an integer from 1 to 10. Furthermore, a molecular weight is preferably in the range of 5 x 10² to 1 x 10⁵ and preferably 5 x 10² to 1 x 10⁴.

The fluorine-containing silane compound shown by the general formula (1) is used for forming a stain-proof layer of a spectacle lens and very excellent in the water repellency and oil repellency. As commercially available fluorine-containing silane compounds, for instance, Optool DSX (trade name, manufactured by Daikin Industries, Ltd.) and KY-130 (trade name, manufactured by Shin-Etsu Chemical Co., Ltd.) can be cited.

As the fluorine-based resin, oligomers or polymers containing a fluorine atom in a molecule can be used. Specific examples thereof include ethylene, ester, acrylate, methacrylate, vinyl, urethane, silicone, imide or carbonate based polymer having a long chain perfluoroalkyl structure such as polytetrafluorinated ethylene (PTFE), an ethyle-tetrafluorinated ethylene copolymer, a hexafluorinated propylene-tetrafluorinated ethylene copolymer, polyvinylidene fluoride (PVdF), poly(pentadecafluoroheptylethyl methacrylate) (PPFMA) or poly(perfluorooctylethyl acrylate). As the fluorine-based resin suitable for the water repelling process, specifically, Durasurf DS-3300TH series (trade name, manufactured by Herbes Corp.) can be cited. The Durasurf DS-3300TH series (trade name) is a fluorine coating agent obtained as a solution by dissolving a fluorine-based resin in a nonflammable fluorine-based solvent and can be used as a water repelling/oil repelling agent, a reflectivity reducing coat and in a stain-proof process.

As a method of coating the fluorine-containing silane compound and the fluorine-based resin, a method where the fluorine-containing silane compound or the fluorine-based resin is dissolved in an organic solvent and the solution is coated on an external periphery surface of the optical low-pass filter and dried to remove the solvent can be adopted. As the coating method, a dipping method, a spin coat method, a flow coat method, a doctor blade method, a roll coat method, a gravure coating method and a curtain flow coating method can be used. As the organic solvent, perfluorohexane, perfluorocyclohexane, perfluorooctane, perfluorodecane, perfluoromethylcyclohexane, perfluoro-1,3-dimethylcyclohexane, perfluoro-4-methoxybutane, perfluoro-4-ethoxybutane and metaxylene hexafluoride can be cited. Furthermore, perfluoroether oil and chlorotrifluoroethylene oligomer oil can be used. Other than the above, chlorofluorocarbon 225 (mixture of CF₃CF₂CHCl₂ and CClF₂CF₂CHClF) can be cited. The above organic solvents can be used singularly or in a combination thereof.

A concentration when the fluorine-containing silane compound or the fluorine-based resin is diluted with the organic solvent is preferably in the range of 0.03 to 1% by weight. When the concentration is too low, a water-repelling layer 21 having a sufficient thickness cannot be formed, and in some cases the water-repelling effect cannot be sufficiently obtained. On the other hand, when the concentration is too high, in some cases, the water-repelling layer may be too thick to improve the advantage of coating, resulting in being economically useless.

A film thickness of the water-repelling layer 21 due to the fluorine-containing silane compound and the fluorine-based resin is, though not particularly restricted, in the range of 0.001 to 0.5 µm and preferably in the range of 0.001 to 0.03 µm. When the film thickness of the water-repelling layer is too thin, the advantage of the water repellency becomes insufficient and when it is too thick a surface becomes unfavorably sticky.

As an example, with Durasurf DS-3300TH (trade name) series, a water-repelling layer was formed on an external periphery surface of an optical low-pass filter. A fluorine-based resin was diluted with a fluorine-based solvent at a solid concentration of 0.2% and the solution was used as a coating solution. The solution was coated on an external periphery of the optical low-pass filter with a brush and dried in an oven at 20°C for 1 hr.

An optical low-pass filter provided with the water-repelling layer and an optical low-pass filter that is not provided with the water-repelling layer were exposed under an atmosphere of 60°C and 90%RH for 1000 hr, followed by observing with a microscope a state of peeling at the external periphery of the optical low-pass filter. As a result, in the periphery of the optical low-pass filter that was not provided with the water-repelling layer, a peeling that extends like a twisted waterway from an external peripheral border toward a central portion was observed. On the other hand, in the periphery of the optical low-pass filter that was provided with the water-repelling layer, the peeling was not observed.

Furthermore, the surfactant is a compound expressed with R¹Y¹. Here, examples of Y¹ includes a hydrophilic polar group, -OH, -(CH₂CH₂O)ₙH, -COOH, -COOK, - COONa, -CONH₂, -SO₃H, -SO₃Na, -OSO₃H, -OSO₃Na, -PO₃H₂, - PO₃Na₂, -PO₃K₂, -NO₂, -NH₂, -NH₃Cl (ammonium salt), -NH₃Br (ammonium salt), ≡NHCl (pyridinium salt) and ≡NHBr (pyridinium salt).

The specific examples of the surfactant include CF₃-CH₂CH₂-COONa, CF₃(CF₂)₃-CH₂CH₂-COONa, CF₃ (CF₂) ₃-CH₂CH₂₋NH₃Br, CF₃ (CF₂) ₅-CH₂CH₂-NH₃Br, CF₃ (CF₂) ₇-CH₂CH₂-NH₃Br, CF₃(CF₂)₇-CH₂CH₂-OSO₃Na, CF₃ (CF₂)₁₁-CH₂CH₂-NH₃Br, CF₃(CF₂)₈₋CH₂CH₂-OSO₃Na, CF₃O (CF₂O)₆-CH₂CH₂-OSO₃Na,CF₃O (C₃F₆O) ₂ (CF₂O) ₃₋CH₂CH₂-OSO₃Na, CF₃O(C₃F₆O)₄-CH₂CH₂-OSO₃Na, CF₃O(C₄F₉O)₅-CH₂CH₂₋OSO₃Na and CF₃O (C₃F₆O)₈-CH₂CH₂-OSO₃Nacan be cited. However, the surfactant is not restricted to the above structures.

Third Embodiment
In an optical low-pass filter according to a third embodiment, an external peripheral border of a phase plate is partially located inside of an external peripheral border of at least one birefringent plate of two birefringent plates to form a step or a recess. By making use of the step or recess, a sealing portion is formed.

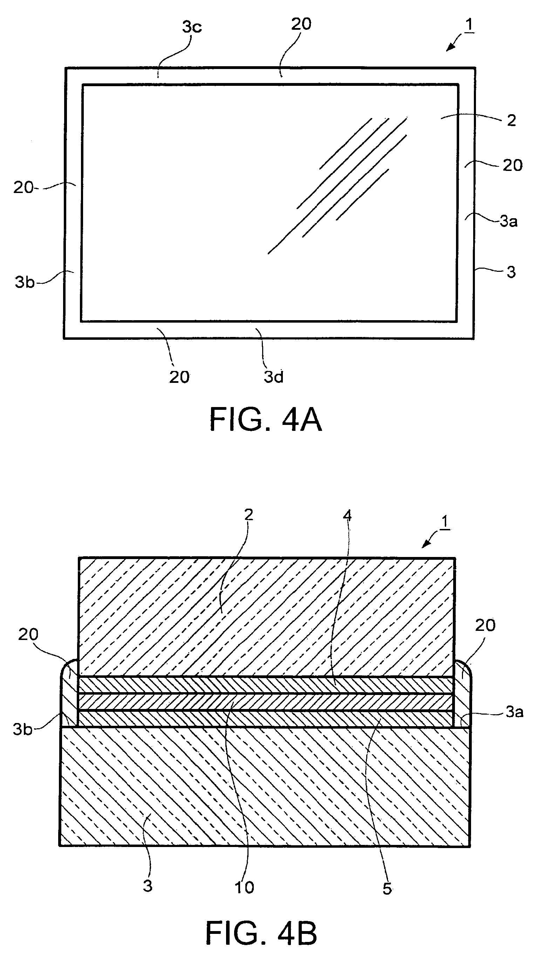

Fig. 4A is a plan view of an optical low-pass filter 1 in example 1 of the third embodiment and Fig. 4B is a sectional view of the optical low-pass filter 1.

A quartz plate 2 as a birefringent plate is formed smaller than a quartz plate 3 as a birefringent plate. When tacky adhesives 4 and 5 and a polymer retardation film 10 as a quarter-wave plate are adhered, the quartz plate 2 is adhered inside of the quartz plate 3 so that the difference of the sizes of the quartz plates 2 and 3 may generate steps 3a, 3b, 3c and 3d. The steps 3a, 3b, 3c and 3d each may be different from each other. In the steps 3a, 3b, 3c and 3d where the external peripheries of two quartz plates are not coincided, the sealing portion 20 is formed. An order of magnitudes of the quartz plates 2 and 3 may be reversed.

According to the example 1 of the third embodiment, since the magnitudes of two quartz plates 2 and 3 are differentiated, between the external periphery surfaces of two quartz plates 2 and 3, the steps 3a, 3b, 3c and 3d are generated. By making use of the steps 3a, 3b, 3c and 3d where the external peripheries of two quartz plates 2 and 3 are not coincided, a sealing portion 20 having a thickness can be readily formed. Thereby, more stable moisture resistance can be provided and the peeling phenomenon can be inhibited from occurring.

In the next place, example 2 of the third embodiment will be described. Here, only items different from example 1 will be described and items that are not described are same as example 1.

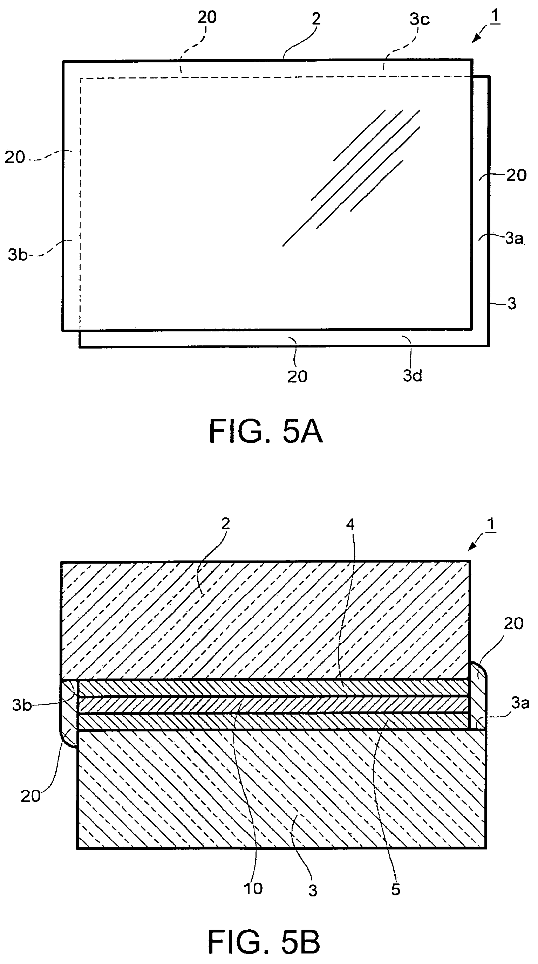

Fig. 5A is a plan view of an optical low-pass filter 1 in example 2 and Fig. 5B is a sectional view of the optical low-pass filter 1.

Magnitudes of quartz plates 2 and 3 as the birefringent plate are same. With positions of the quartz plates 2 and 3 shifted each other in an oblique direction, tacky adhesives 4 and 5 and a polymer retardation film 10 as a quarter-wave plate are adhered, thereby steps 3a, 3b, 3c and 3d can be generated between the quartz plates 2 and 3. The steps 3a and 3d and the steps 3b and 3d, respectively, are generated in the same direction. In the steps 3a, 3b, 3c and 3d where the external peripheries of two quartz plates 2 and 3 are not coincided, the sealing portion 20 is formed. As a method of differentiating positions of the quartz plates 2 and 3, the plates may be relatively rotated, positions thereof may be differentiated in one of four oblique directions, or the rotation and the oblique movement may be simultaneously carried out.

According to the example 2 of the third embodiment, since the quartz plates 2 and 3 can be formed into the same magnitude, the optical low-pass filter can be manufactured without differentiating a manufacturing process thereof. That is, when the quartz plates 2 and 3 are adhered with positions thereof shifted relatively, the steps 3a, 3b, 3c and 3d can be formed, and, by making use of the steps 3a, 3b, 3c and 3d, a sealing portion 20 with a thickness can be readily formed. Thereby, more stable moisture resistance can be provided and the peeling phenomenon can be inhibited from occurring.

In the next place, example 3 of the third embodiment will be described. Here, only items different from example 1 will be described and items that are not described are same as example 1.

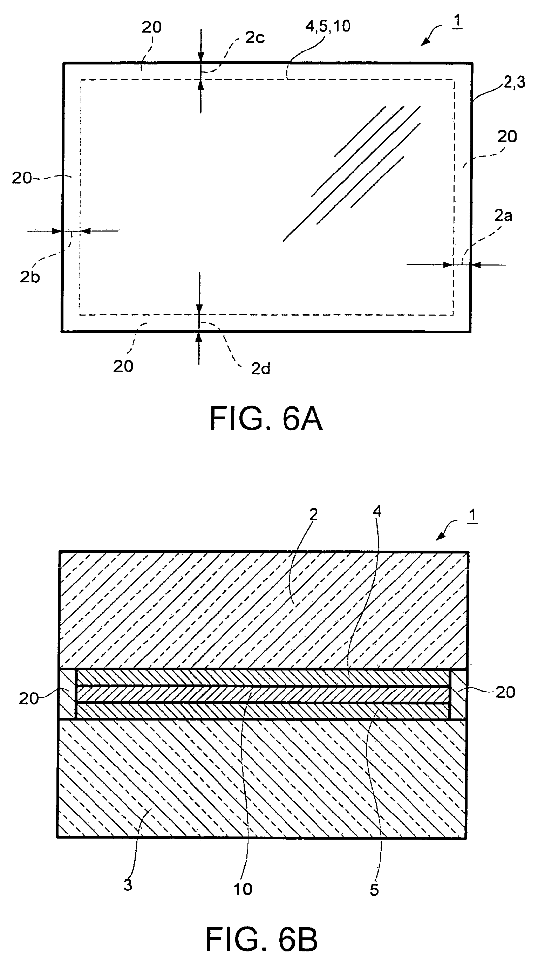

Fig. 6A is a plan view of an optical low-pass filter 1 in example 3 and Fig. 6B is a sectional view of the optical low-pass filter 1.

Quartz plates 2 and 3 as the birefringent plate have the same magnitude. Tacky adhesives 4 and 5 and a polymer retardation film 10 as a quarter-wave plate are made smaller than two quartz plates 2 and 3 in the magnitude, an entire peripheral border of the retardation film 10 is located inside of external peripheral borders of two quartz plates 2 and 3, between the external peripheral border of the retardation film 10 and the external peripheries of two quartz plates 2 and 3 recesses (gaps) 2a, 2b, 2c and 2d are formed, and the sealing portion 20 is formed so as to bury the recesses 2a, 2b, 2c and 2d. The recesses 2a, 2b, 2c and 2d may be different from each other or may be tilted to each other.

According to the example 3 of the third embodiment, since the quartz plates 2 and 3 can be formed into the same magnitude, the optical low-pass filter can be manufactured without differentiating a manufacturing process thereof. That is, when the quartz plates 2 and 3 are adhered, the retardation film 10 is formed smaller than the quartz plates 2 and 3 in the magnitude and thereby the external peripheral border of the retardation film 10 is placed inside of the external peripheral borders of the quartz plates 2 and 3. By making use of the recesses 2a, 2b, 2c and 2d formed between the external peripheral border of the retardation film 10 and the external peripheries of the quartz plates 2 and 3, a sealing portion 20 with a thickness can be readily formed. Thereby, more stable moisture resistance can be provided and the peeling phenomenon can be inhibited from occurring.

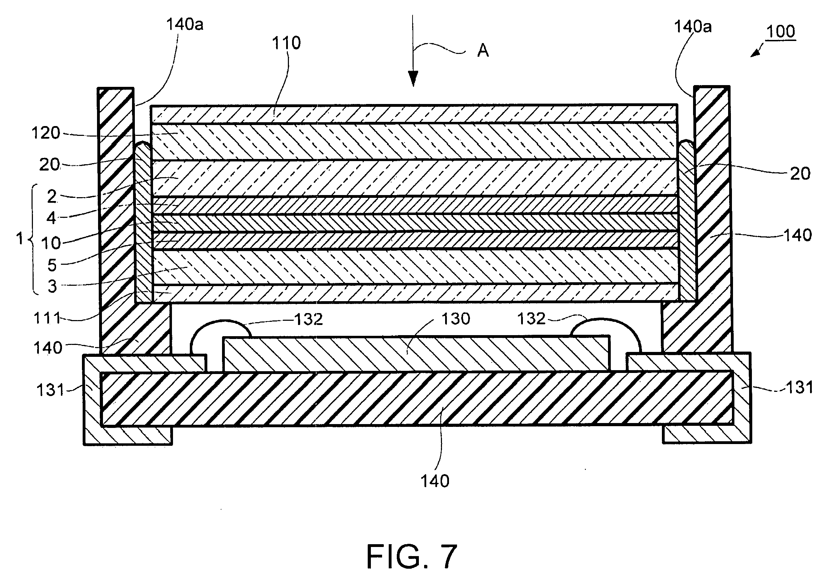

Fourth Embodiment
Next, an embodiment where the optical low-pass filter according to the invention is applied to an imaging device will be described. Fig. 7 is a sectional view of an optical low-pass filter 1 and a solid-state imaging element 130 in the imaging device.

In an imaging device 100, light transmitted through an imaging lens (not shown) enters from a direction of an arrow mark A and transmits an antireflection film 110 and an infrared absorption filter 120. Light transmitted through the infrared absorption filter 120 is suppressed with an optical low-pass filter 1 in a high spatial frequency component and light exited from the antireflection film 111 reaches the solid-state imaging element 130. Light detected with the solid-state imaging element 130 is converted into an electrical signal and transferred to other connected electrical circuits.

The optical low-pass filter 1 is provided with a quartz plate 2, tacky adhesives 4 and 5, a retardation film 10 and a quartz plate 3 and integrated with an antireflection film 110 and an infrared absorption filter 120.

The solid-state imaging element 130 includes a plurality of pixels and has a structure where the pixels are regularly arranged with a constant pitch. The solid-state imaging element 130 is constituted of, for instance, CCDs (Charge Coupled Devices) and CMOSs (Complementary MOS) and converts received light into an electrical signal.

The solid-state imaging element 130 is sealed in a concave package 140 as a fixing member. The package 140 includes at least an opening 140a that houses the optical low-pass filter 1. Furthermore, an external connection wiring 131 connecting the inside and the outside of the package 140 is disposed penetrating through a sidewall of the package 140 and the solid-state imaging element 130 and the external connection wiring 131 are electrically connected through a bonding wire 132.

The opening portion 140a as the fixing member and at least the optical low-pass filter 1 are fixed with a sealing portion 20 that is a resin composition such as a fluorine-based resin, an epoxy resin or an acrylic resin. In the imaging device 100, the optical low-pass filter 1 combines a stain-proof glass of the package that hermetically seals the solid-state imaging element 130. The sealing portion 20 is coated in an area containing at least the tacky adhesive layers 4 and 5 and the retardation film 10. Accordingly, in the imaging device 100, the sealing portion 20 covers an entire external peripheral border of the tacky adhesive layers 4 and 5 and the retardation film 10 to inhibit the moisture from permeating and works as a bonding material for fixing the optical low-pass filter 1.

According to the imaging device 100, the optical low-pass filter 1 can be fixed to the opening portion 140a as the fixing member with the sealing portion 20 constituted of an adhesive agent or a resin composition and thereby the moisture resistance of the retardation film 10 of the optical low-pass filter 1 can be improved.

In the above description, a tacky adhesive layer is used to join the respective members constituting an optical low-pass filter. However, an adhesive layer can generate identical advantages.

The optical low-pass filter according to the invention can be applied in a field where when it is disposed in front of an imaging element a high frequency component of a spatial frequency can be suppressed to improve image quality outputted from the imaging element.

## Claims

1. An optical low-pass filter comprising:
two birefringent plates;
a phase plate made of a polymer film and bonded between the two birefringent plates through an adhesive layer or a tacky layer; and
a sealing portion provided over an entire periphery of an external periphery surface of the optical low-pass filter.

2. The optical low-pass filter according to claim 1, wherein the sealing portion is a layer formed by a physical deposition method or a layer formed by a chemical deposition method.

3. The optical low-pass filter according to claim 1, wherein the sealing portion is constituted of a sticky tape.

4. The optical low-pass filter according to claim 1, wherein the sealing portion is constituted of a resin composition.

5. The optical low-pass filter according to claim 1, wherein an infrared absorption filter plate is bonded through an adhesive layer or a sticky layer to an incidence side of light of a birefringent plate located on an incidence side of light of the two birefringent plates; and the sealing portion covers an entire periphery surface of the infrared absorption filter plate and the adhesive layer or the tacky layer.

6. The optical low-pass filter according to claim 1, wherein an external peripheral border of the phase plate is at least partially located inside of an external peripheral border of at least one birefringent plate of the two birefringent plates to form a step or a recess and the sealing portion is formed on the step or the recess.

7. An optical low-pass filter in which between two birefringent plates a phase plate made of a polymer film is bonded through an adhesive layer or a tacky layer, wherein an entire periphery of an external periphery surface of the optical low-pass filter is processed with a water repelling agent.

8. The optical low-pass filter according to claim 7, wherein the water repelling agent is a silane coupling agent.
